# EUROPÄISCHE PATENTSCHRIFT

(11) **EP 3 462 538 B1**
(45) Veröffentlichungstag und Bekanntmachung des Hinweises auf die Patenterteilung: **20.01.2021**
(21) Anmeldenummer: 18192170.1
(22) Anmeldetag: 03.09.2018
(51) Int. Cl.: H01Q 1/32, B61D 17/12, H02G 3/08

(54) **ELEKTRANTEN ALS ANTENNENTRÄGER**
ELECTRANTS AS MOUNTING FOR AN ANTENNA
ÉLECTRANTS EN TANT QUE SUPPORT D'ANTENNE

(30) Priorität: 29.09.2017 DE 102017217426
(43) Veröffentlichungstag der Anmeldung: 03.04.2019
(73) Patentinhaber: Siemens Mobility GmbH, 81739 München (DE)
(72) Erfinder: Lehmann, Michael, 44869 Bochum (DE)

(56) Entgegenhaltungen:
- DE-A1-102015 203 666
- DE-T5-112010 002 603
- JP-A- H04 130 801
- US-A1- 2003 214 449
- US-B1- 9 072 771

## Beschreibung

Die Erfindung betrifft eine Antennenanordnung für ein Dachmodul eines Schienenfahrzeugs. Weiterhin betrifft die Erfindung ein Schienenfahrzeug.

Elektrifizierte Schienenfahrzeuge umfassen so genannte Kopfmodule oder Dachmodule, welche elektrische Leitungen aufweisen, die zur Versorgung von verschiedenen Arten von Aggregaten mit elektrischer Energie und zur Durchleitung der elektrischen Energie in das Fahrzeuginnere genutzt werden. Herkömmlich werden die wagenseitigen Leitungen durch Durchbrüche in der Fahrerraumrückwand in das Kopfmodul verlegt. Diese Durchbrüche werden durch zusätzliche Brandschutzformteile oder andere Brandschutzmaterialien abgedichtet. Im Kopfmodul werden diese Leitungen an Haltern zu den E-Schnittstellen auf den E-Schränken oder anderen Stellen verlegt. Eine verbesserte Möglichkeit zur Leitungsverlegung ist durch den Einsatz von Elektranten gegeben, die als Schnittstellen für die elektrischen Leitungen zwischen dem Innenraum und der Dachseite dienen. Die wagenseitigen Leitungen enden auf der Innenseite in Steckern, die dort fest montiert sind. Umgekehrt können auch die dachseitigen Kabel an Steckern der Elektranten angeschlossen werden. Diese modulare Bauweise hat den Vorteil, dass das Dachmodul getrennt von dem Innenbereich und der Innenverkabelung fertiggestellt werden kann.

Dachantennen zur Datenübertragung zwischen einem Schienenfahrzeug und der Landseite müssen so auf dem Schienenfahrzeug montiert werden, dass die Abstrahlung und der Empfang von Radiowellen nicht durch Hindernisse beeinträchtigt wird. Daher müssen die Antennen oberhalb der Dachgeräte innerhalb der Einschränkung montiert werden. Außerdem muss die notwendige elektrische Schnittstelle wasserdicht ausgeführt werden.

Bisher werden die Antennen auf separaten Haltern oder auf Geräten wie zum Beispiel einem HVAC-System (HVAC = Heating, Ventilation and Air Conditioning = Klimaanlage), befestigt. Die Leitungszuführung muss dabei durch Dachdurchbrüche in Schutzschläuchen über das Dach zu den Antennen erfolgen. In der Regel werden die Antennen auf einen Antennenkasten oder eine Metallplatte montiert. In beiden Fällen wird der Schutzschlauch mit Hilfe einer Verschraubung dicht mit der Antenne verbunden. Es werden also zusätzliche Bauteile, wie zum Beispiel Halter, Montagebleche, Antennenkästen und Schutzschläuche, benötigt, um die Antennen zu installieren. US 9 072 771 B1, DE 11 2010 002603 T5 und JP H04 130801 A offenbaren Antennenordnungen auf einem Schienenfahrzeug. US 2003/214449 A1 offenbart eine Satellitenantenne auf einem Fahrzeug.

Es besteht mithin die Aufgabe, eine Anordnung der Antennen zu wählen, welche eine einfachere Montage zulässt und die Anzahl zusätzlicher Bauteile für die Montage reduziert.

Diese Aufgabe wird durch eine Antennenanordnung gemäß Patentanspruch 1 und ein Schienenfahrzeug gemäß Patentanspruch 4 gelöst.

Die erfindungsgemäße Antennenanordnung weist einen Elektranten, welcher auf einem Dach eines Schienenfahrzeugs angeordnet ist, auf. Zudem umfasst die erfindungsgemäße Antennenanordnung eine Antenne, welche an dem Elektranten angeordnet ist und mit diesem fest verbunden ist. Die Antenne dient dazu, eine drahtlose Kommunikation zwischen dem Schienenfahrzeug und stationären Datenübertragungssystemen, wie zum Beispiel dem Internet oder Funktelefonnetzen, zu realisieren. Dabei ist eine elektrische Verbindung zwischen der Antenne und einem Innenraum des Schienenfahrzeugs über den Elektranten hergestellt. Vorteilhaft ist durch die erfindungsgemäße Antennenanordnung der Montageaufwand der Antennen reduziert und die Leitungen, welche zur Antenne führen, können kürzer ausfallen. Weiterhin wird Platz auf dem Dach des Schienenfahrzeugs eingespart und benachbarte Einheiten sich leichter demontierbar.

Das erfindungsgemäße Schienenfahrzeug weist eine erfindungsgemäße Antennenanordnung auf. Das erfindungsgemäße Schienenfahrzeug teilt die Vorteile der erfindungsgemäßen Antennenanordnung

Die abhängigen Ansprüche sowie die nachfolgende Beschreibung enthalten jeweils besonders vorteilhafte Ausgestaltungen und Weiterbildungen der Erfindung. Weiterhin können im Rahmen der Erfindung auch die verschiedenen Merkmale unterschiedlicher Ausführungsbeispiele und Ansprüche auch zu neuen Ausführungsbeispielen kombiniert werden.

In der erfindungsgemäßen Antennenanordnung weist der Elektrant eine Oberseite auf und die Antenne ist auf der Oberseite des Elektranten angeordnet. Vorteilhaft ist die Antenne derart angeordnet, dass keinerlei oder zumindest weniger Hindernisse im Abstrahlbereich und im Empfangsbereich liegen, wodurch ein optimaler Empfang und eine optimale Emission von Signalen erreicht werden kann.

In der erfindungsgemäßen Antennenanordnung ist zwischen der Antenne und dem Elektranten ein Antennenabstrahlblech angeordnet. Mit Hilfe des Antennenabstrahlblechs wird die Abstrahlung der Antenne auf eine Hemisphäre beschränkt, deren Basiskreis parallel zu der Oberseite des Elektranten liegt. In diesem Bereich wird die Abstrahlung verstärkt, während die darunter liegenden Bereiche, beispielsweise der Fahrgastbereich gegen elektromagnetische Strahlung geschützt wird.

Die Erfindung wird im Folgenden unter Hinweis auf die beigefügten Figuren anhand von Ausführungsbeispielen noch einmal näher erläutert. Es zeigen:
FIG 1 eine schematische Darstellung eines Schienenfahrzeugs mit einer Mehrzahl von Elektranten, welche Teil einer Antennenanordnung gemäß einem Ausführungsbeispiel der Erfindung sind,
FIG 2 eine Seitenansicht einer Antennenanordnung gemäß der Erfindung,
FIG 3 eine Explosionsansicht einer Antennenanordnung gemäß der Erfindung,
FIG 4 ein Gehäuse eines Elektranten für eine Antennenanordnung gemäß der Erfindung.

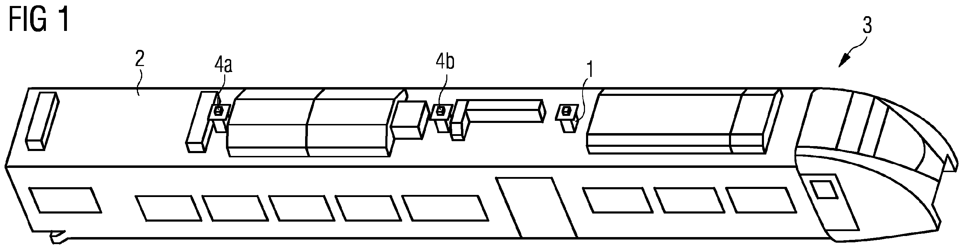

In FIG 1 ist eine perspektivische Ansicht auf ein Schienenfahrzeug 3 von schräg oben gezeigt. Das Schienenfahrzeug 3 weist auf seinem Dach 2 eine Vielzahl von technischen Installationen, wie zum Beispiel Klimaanlagen, auf. Weiterhin sind auf dem Dach 2 zwei Antennen 4a, 4b, welche Teil einer Antennenanordnung gemäß einem Ausführungsbeispiel der Erfindung sind, angeordnet. Die Antennen 4a, 4b sind auf Elektranten 1 montiert. Ein solcher Elektrant 1 ist weiter rechts von den beiden Antennen 4a, 4b gezeigt.

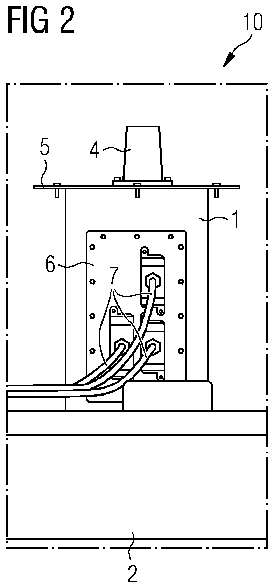

In FIG 2 ist eine Seitenansicht einer Antennenanordnung 10 gemäß der Erfindung veranschaulicht. Die Antennenanordnung 10 umfasst einen Elektranten 1, der auf einem Wagendach 2 eines Schienenfahrzeugs montiert ist. Der Elektrant 1 umfasst seitlich eine Schnittstelle 6 für elektrische Leitungen 7, insbesondere Steuerleitungen für Dachgeräte und Leitungen der Wagenverdrahtung. Auf der Oberseite des Elektranten 1 ist ein Antennenabstrahlblech 5 fest montiert und auf dem Antennenabstrahlblech 5 ist eine Antenne 4 angeordnet.

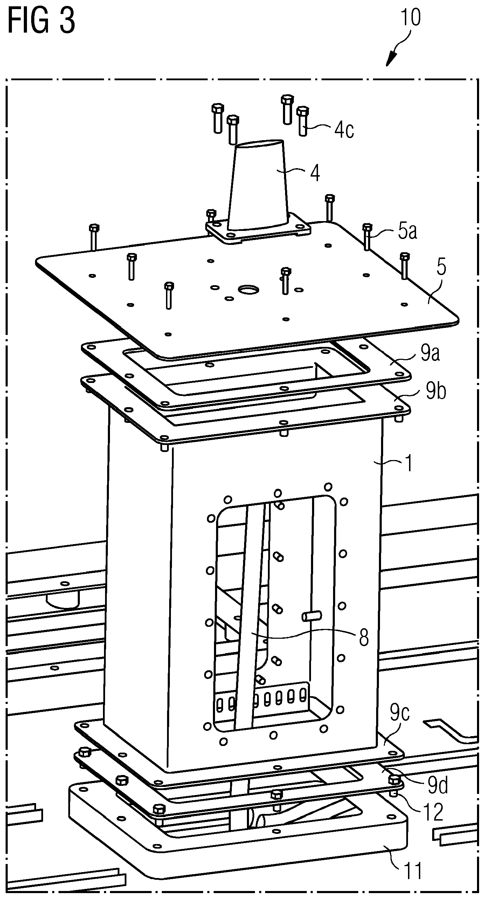

In FIG 3 ist eine Explosionszeichnung einer Antennenanordnung 10 gemäß der Erfindung veranschaulicht. Wie in FIG 3 zu erkennen ist, ist eine Antenne 4 mit vier Schrauben 4c auf einem Antennenabstrahlblech 5 befestigt. Das Antennenabstrahlblech 5 ist seinerseits mit einer Mehrzahl von Schrauben 5a auf der Oberseite 9b des Elektranten 1 befestigt. Zwischen dem Antennenabstrahlblech 5 und der Oberseite 9b des Elektranten 1 befindet sich eine Dichtung 9a, mit deren Hilfe ein Endringen von Wasser in den Elektranten 1 vermieden werden kann. Durch den Elektranten 1 verläuft vertikal eine Antennenleitung 8, die das Innere eines Schienenfahrzeugs 3 mit der Antenne 4 verbindet. Die Antennenleitung 8 verläuft also vertikal aus dem Innenraum des Schienenfahrzeugs 3 nach oben durch den Innenbereich des Elektranten 1 hindurch und durch das Antennenabstrahlblech 5 nach oben zu der Antenne 4. Die Unterseite 9c des Elektranten 1 ist mit Hilfe von Schrauben 12 auf einem sockelartigen Wagenkasten 11 befestigt, wobei zwischen dem Wagenkasten 11 und der Unterseite 9c des Elektranten 1 eine weitere Dichtung 9d angeordnet ist.

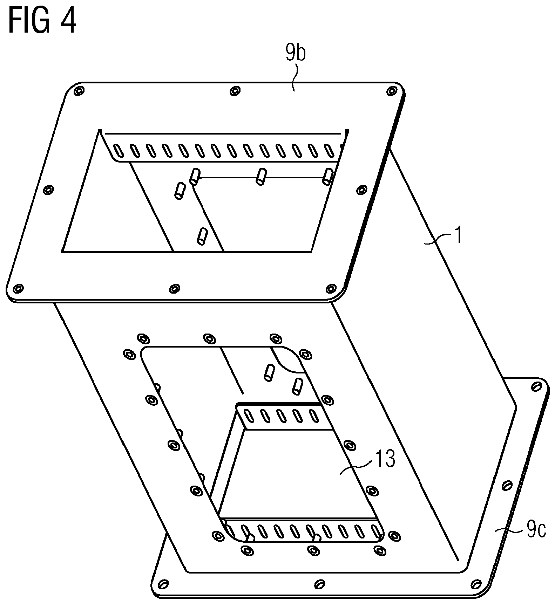

In FIG 4 ist ein Gehäuse eines Elektranten 1 veranschaulicht. Das Gehäuse weist eine kragenartige Oberseite 9b und eine parallel dazu verlaufende kragenartige Unterseite 9c auf. Teil des Gehäuses des Elektranten 1 ist auch eine Aussparung 13, welche die Schnittstelle 6 für Leitungen 7 (siehe FIG 2), insbesondere Steuerleitungen für Dachgeräte und Leitungen der Wagenverdrahtung, aufnimmt.

Es wird abschließend noch einmal darauf hingewiesen, dass es sich bei der beschriebenen Antennenanordnung 10 lediglich um ein bevorzugtes Ausführungsbeispiel der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Antennenanordnung (10), aufweisend:
- einen Elektranten (1), welcher auf einem Dach (2) eines Wagenkastens (11) eines Schienenfahrzeugs (3) angeordnet ist, wobei der Elektrant (1) seitlich zumindest eine Aussparung (13) aufweist, welche eine Schnittstelle (6) aufnimmt, mittels welcher elektrische Leitungen im Innenraum des Wagenkastens (11) mit elektrischen Leitungen (7) auf dem Dach des Wagenkastens verbunden werden, **dadurch gekennzeichnet, dass** der Elektrant (1) an der Oberseite ein Antennenabstrahlblech (5) aufweist, auf welchem eine Antenne (4) angeordnet und mit diesem fest verbunden ist, und wobei eine Antennenleitung (8) zur Herstellung einer elektrischen Verbindung aus dem Innenraum des Wagenkastens (11) vertikal durch einen Innenbereich des Elektranten (1) und das Antennenabstrahlblech (5) zu der Antenne (4) geführt ist.

2. Schienenfahrzeug (3), aufweisend eine Antennenanordnung (10) nach Anspruch 1.

## Claims

1. Antenna arrangement (10) having:
- an electrant (1), which is arranged on a roof (2) of a vehicle body (11) of a rail vehicle (3), wherein on the side the electrant (1) has at least one cut-out (13), which receives an interface (6), by means of which electric lines in the interior of the vehicle body (11) are connected to electric lines (7) on the roof of the vehicle body,
**characterised in that**
at the top the electrant (1) has an antenna radiation baffle (5), upon which an antenna (4) is arranged and is fixedly connected hereto, and wherein an antenna line (8) for establishing an electrical connection is guided out of the interior of the vehicle body (11) vertically through an inner region of the electrant (1) and the antenna radiation baffle (5) to the antenna (4).

2. Rail vehicle (3), having an antenna arrangement (10) according to claim 1.

## Revendications

1. Agencement (10) d'antenne, comportant :
- un électrant (1), qui est disposé sur le toit (2) d'une caisse (11) d'un véhicule (3) ferroviaire, l'électrant (1) ayant latéralement au moins un évidement (13), qui reçoit une interface (16), au moyen de laquelle des lignes électriques à l'intérieur de la caisse (11) sont reliées à des lignes (7) électriques sur le toit de la caisse,
**caractérisé en ce que**
l'électrant (1) a, du côté supérieur, une tôle (5) de rayonnement d'antenne, sur laquelle une antenne (4) est disposée et est reliée fixement à celle-ci, et dans lequel une ligne (8) d'antenne, pour produire une liaison électrique à partir de l'intérieur de la caisse (11), va verticalement à l'antenne (4), en passant par une région intérieure de l'électrant (1) et à travers la tôle (5) de rayonnement d'antenne.

2. Véhicule (3) ferroviaire, ayant un agencement (10) d'antenne suivant la revendication 1.
